# EUROPÄISCHE PATENTSCHRIFT

(11) **EP 3 205 009 B1**
(45) Veröffentlichungstag und Bekanntmachung des Hinweises auf die Patenterteilung: **11.07.2018**
(21) Anmeldenummer: 15808563.9
(22) Anmeldetag: 09.12.2015
(51) Int. Cl.: H02M 7/00, H01H 31/26, H01H 31/32

(54) **UMRICHTERANORDNUNG MIT BEWEGLICHEN KONTAKTEN, ABER ORTSFESTER UMRICHTERBAUGRUPPE**
CONVERTER ASSEMBLY WITH MOVABLE CONTACTS, BUT FIXED CONVERTER MODULE
AGENCEMENT DE CONVERTISSEUR DOTÉ DE CONTACTS MOBILES, DOTÉ CEPENDANT D'UN BLOC DE CONVERTISSEUR FIXE

(30) Priorität: 20.01.2015 EP 15151795
(43) Veröffentlichungstag der Anmeldung: 16.08.2017
(73) Patentinhaber: Siemens Aktiengesellschaft, 80333 München (DE)
(72) Erfinder: NAGEL, Andreas, 90431 Nürnberg (DE); PONATH, Harald, 96114 Hirschaid (DE)
(86) Internationale Anmeldenummer: PCT/EP2015/079045
(87) Internationale Veröffentlichungsnummer: WO 2016/116213

(56) Entgegenhaltungen:
- EP-A1- 2 544 203

## Beschreibung

Die vorliegende Erfindung geht aus von einer Umrichteranordnung,
- wobei die Umrichteranordnung eine Basisstruktur aufweist,
- wobei auf der Basisstruktur Leitungen eines ersten elektrischen Netzes angeordnet sind.

Hochleistungsstromrichter werden aus Gründen der Verfügbarkeit häufig redundant aufgebaut. Dies gilt beispielsweise auch - aber nicht nur - im Bahnbereich. Im Falle eines redundanten Aufbaus besteht das Umrichtersystem aus mehreren einzelnen Umrichterbaugruppen.

Im Falle einer Fehlfunktion einer einzelnen Umrichterbaugruppe muss die fehlerhafte Baugruppe zumindest von Leitungen des ersten Netzes getrennt werden. Im Stand der Technik wird zu diesem Zweck üblicherweise ein Trennschalter verwendet.

Um Umrichterbaugruppen einzeln aus dem Umrichtersystem lösen zu können, sind die einzelnen Umrichterbaugruppen weiterhin oftmals mit den Leitungen des ersten Netzes über Steckverbindungen verbunden. Die Steckverbindungen werden jedoch in der Regel nicht als Trennschalter für eine Trennung im Falle einer Fehlfunktion verwendet. Aus der EP 2 387 141 A1 ist jedoch auch diese Vorgehensweise bekannt. Bei der EP 2 387 141 A1 wird im Falle einer Fehlfunktion einer Umrichterbaugruppe die jeweilige Umrichterbaugruppe mittels eines Aktuators als Ganzes bewegt und dadurch von den Leitungen des ersten Netzes getrennt. Beim Trennen der jeweiligen Umrichterbaugruppe von den Leitungen des ersten Netzes werden insbesondere die Steckverbindungen gelöst.

Die Lösung der EP 2 387 141 A1 stellt einen Fortschritt gegenüber dem konventionellen Stand der Technik dar, da bei der EP 2 387 141 A1 die ohnehin vorhandene Steckverbindung zum Trennen der Umrichterbaugruppe von den Leitungen des ersten Netzes verwendet wird. Eigenständige Trennschalter, die im konventionellen Stand der Technik zusätzlich zu den Steckverbindungen vorhanden sind, werden dadurch entbehrlich.

Die Lösung der EP 2 387 141 A1 ist jedoch deshalb nachteilig, weil die gesamte Masse der Umrichterbaugruppe bewegt werden muss. Ferner muss die Umrichterbaugruppe sowohl in der ersten Verbindungsposition als auch in der ersten Freigabeposition mechanisch fixiert werden. Dies ist insbesondere dann von Nachteil, wenn die Basisstruktur und mit ihr die Umrichterbaugruppe mechanischen Schock- und Rüttelbelastungen und/oder Vibrationen ausgesetzt ist.

Die Aufgabe der vorliegenden Erfindung besteht darin, Möglichkeiten zu schaffen, mittels derer auf einfache, effiziente, zuverlässige und kostengünstige Weise eine elektrische Abtrennung der Umrichterbaugruppe von den Leitungen des ersten Netzes erreicht werden kann.

Die Aufgabe wird durch eine Umrichteranordnung mit den Merkmalen des Anspruchs 1 gelöst. Vorteilhafte Ausgestaltungen der erfindungsgemäßen Umrichteranordnung sind Gegenstand der abhängigen Ansprüche 2 bis 12. Anspruch 13 nennt einen bevorzugten Anwendungsfall einer erfindungsgemäßen Umrichteranordnung.

Erfindungsgemäß wird eine Umrichteranordnung der eingangs genannten Art dadurch ausgestaltet,
- dass auf der Basisstruktur eine Mehrzahl von ersten Kontakten angeordnet ist, die mittels eines ersten Aktuators zumindest von einer ersten Verbindungsposition in eine erste Freigabeposition überführbar sind,
- dass in der ersten Freigabeposition eine Umrichterbaugruppe als Einheit in einer Aufnahme der Basisstruktur befestigbar ist und aus der Aufnahme entfernbar ist,
- dass die Umrichterbaugruppe, sofern sie in der Aufnahme der Basisstruktur befestigt ist, in der Aufnahme ortsfest angeordnet ist und mit den Leitungen des ersten Netzes elektrisch verbunden ist, wenn und solange die ersten Kontakte sich in der ersten Verbindungsposition befinden, und von den Leitungen des ersten Netzes elektrisch getrennt ist, wenn und solange die ersten Kontakte sich in der ersten Freigabeposition befinden, und
- dass die Aufnahme beim Überführen der ersten Kontakte von der ersten Verbindungsposition in die erste Freigabeposition nicht bewegt wird.
Durch diese Ausgestaltung ist es zum Trennen der Umrichterbaugruppe von den Leitungen des ersten Netzes lediglich noch erforderlich, die ersten Kontakte von der ersten Verbindungsposition in die erste Freigabeposition zu überführen. Ein Bewegen anderer Teile - insbesondere der schweren Umrichterbaugruppe - ist nicht erforderlich. Zurückziehbare Kontakte sind an sich zum Beispiel bei Hochspannungs-Lasttrennern bekannt, siehe EP-A-2544203. Vorzugsweise ist das erste Netz ein Gleichspannungsnetz. In diesem Fall weist das Gleichspannungsnetz in der Regel einen Stützkondensator auf. Im Rahmen der vorliegenden Erfindung kann insbesondere der Stützkondensator ortsfest auf der Basisstruktur angeordnet sein.
In einer bevorzugten Ausgestaltung sind die ersten Kontakte mit den Leitungen des ersten Netzes über flexible Leitungen verbunden. Diese Lösung ist insbesondere besonders einfach und kostengünstig realisierbar.
Die flexiblen Leitungen können als Bandleitungen ausgebildet sein, die von den Leitungen des ersten Netzes zu den ersten Kontakten gesehen eine Länge aufweisen, im Querschnitt gesehen eine Breite und eine Dicke aufweisen und voneinander einen Abstand aufweisen. Vorzugsweise ist die Länge möglichst klein, die Breite möglichst groß und der Abstand möglichst klein. Insbesondere sollte vorzugsweise gelten, dass die Breite erheblich größer als der Abstand der Leitungen voneinander ist, insbesondere mindestens dreimal so groß. Vorzugsweise ist weiterhin die Breite größer als die Länge der Leitungen.

Alternativ zu einer Ausgestaltung als flexible Leitungen können die ersten Kontakte als Kontaktbrücken ausgebildet sein, die in der ersten Verbindungsposition sowohl mit der Umrichterbaugruppe als auch mit den Leitungen des ersten Netzes elektrisch verbunden sind und in der ersten Freigabeposition sowohl von der Umrichterbaugruppe als auch von den Leitungen des ersten Netzes elektrisch getrennt sind.

Die ersten Kontakte können insbesondere als Stecker oder als Aufnahmen für Stecker elektrischer Steckverbindungen ausgebildet sein. Eine Ausgestaltung als Aufnahmen für Stecker ist bevorzugt.

In Einzelfällen kann es möglich sein, dass die Ansteuerung des Aktuators durch eine Bedienperson erfolgt. In der Regel weist die Umrichteranordnung jedoch eine Auswertungseinrichtung auf, mittels derer automatisch eine Fehlfunktion der Umrichterbaugruppe erfasst wird. In diesem Fall ist die Auswertungseinrichtung als Steuereinrichtung für den ersten Aktuator ausgebildet und ist mit dem ersten Aktuator steuerungstechnisch verbunden.

Der erste Aktuator kann nach Bedarf als elektrischer, hydraulischer oder pneumatischer Aktuator ausgebildet sein.

In der Regel ist die Umrichterbaugruppe mit Leitungen eines zweiten elektrischen Netzes verbunden. Die Leitungen des zweiten Netzes können insbesondere auf der Basisstruktur angeordnet sein. In diesem Fall besteht eine bezüglich des zweiten Netzes vorzugsweise eine zur Ausgestaltung des ersten Netzes analoge Ausgestaltung. In diesem Fall ist also vorzugsweise vorgesehen,
- dass auf der Basisstruktur eine Mehrzahl von zweiten Kontakten angeordnet ist, die mittels eines zweiten Aktuators zumindest von einer zweiten Verbindungsposition in eine zweite Freigabeposition überführbar sind,
- dass in der zweiten Freigabeposition die Umrichterbaugruppe als Einheit in der Aufnahme der Basisstruktur befestigbar ist und aus der Aufnahme entfernbar ist,
- dass, sofern die Umrichterbaugruppe in der Aufnahme der Basisstruktur befestigt ist, die Umrichterbaugruppe mit den Leitungen des zweiten Netzes elektrisch verbunden ist, wenn und solange die zweiten Kontakte sich in der zweiten Verbindungsposition befinden, und von den Leitungen des zweiten Netzes elektrisch getrennt ist, wenn und solange die zweiten Kontakte sich in der zweiten Freigabeposition befinden und
- dass die Aufnahme beim Überführen der zweiten Kontakte von der zweiten Verbindungsposition in die zweite Freigabeposition nicht bewegt wird.

In Einzelfällen ist es möglich, dass der erste und der zweite Aktuator unabhängig voneinander angesteuert werden. Im Regelfall werden der erste und der zweite Aktuator jedoch von einer Steuereinrichtung gemeinsam angesteuert oder sind miteinander identisch.

Das zweite Netz kann insbesondere ein mehrphasiges Drehstromnetz sein.

Im Übrigen sind die obigen Ausführungen bezüglich des ersten Netzes in analoger Weise auch auf das zweite Netz anwendbar.

Die erfindungsgemäße Umrichteranordnung ist nach Bedarf ortsfest oder mobil einsetzbar. Insbesondere bei einem mobilen Einsatz besteht eine bevorzugte Anwendung der vorliegenden Erfindung darin, dass ein Fahrzeug eine erfindungsgemäße Umrichteranordnung aufweist und dass die Umrichteranordnung über ein zweites Netz mit einem Fahrantrieb des Fahrzeugs verbunden ist.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: eine Umrichteranordnung,
- FIG 2: die Umrichteranordnung von FIG 1 in einem anderen Zustand,
- FIG 3: schematisch eine Ausgestaltung von ersten Kontakten,
- FIG 4: erste Kontakte und einen ersten Aktuator in einer ersten Verbindungsposition,
- FIG 5: die ersten Kontakte und den ersten Aktuator von FIG 4 in einer ersten Freigabeposition,
- FIG 6: Verbindungen von ersten Kontakten und Leitungen eines ersten Netzes,
- FIG 7: eine flexible Leitung im Querschnitt,
- FIG 8: erste Kontakte und
- FIG 9: ein Fahrzeug mit einer Umrichteranordnung.

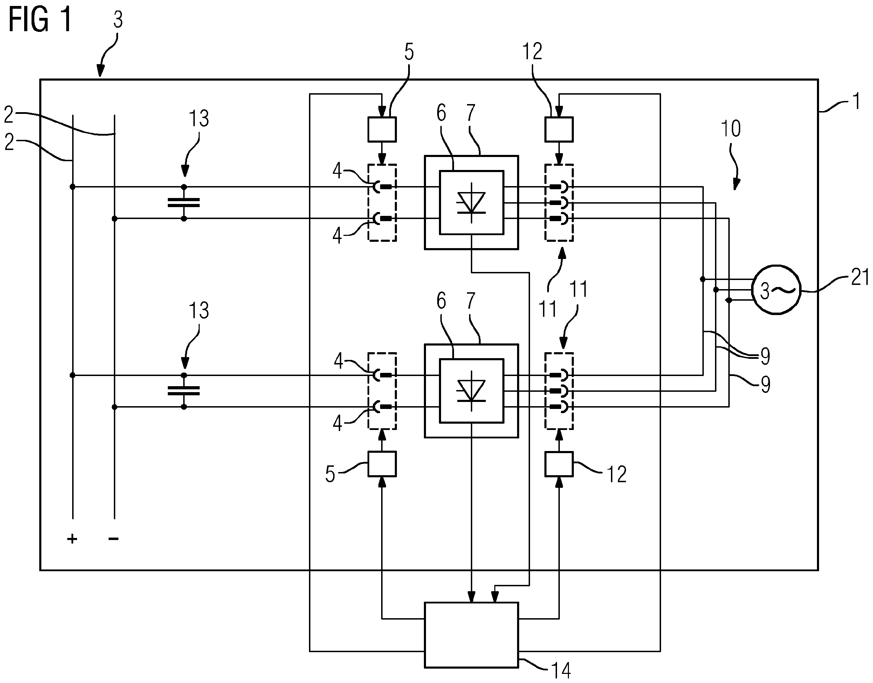

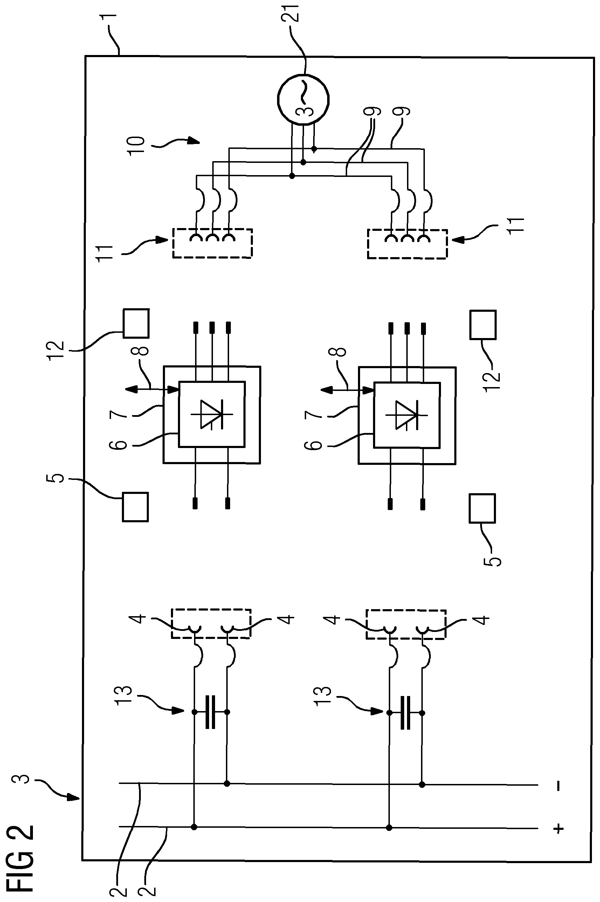

Gemäß den FIG 1 und 2 weist eine Umrichteranordnung eine Basisstruktur 1 auf. Auf der Basisstruktur 1 sind Leitungen 2 eines ersten elektrischen Netzes 3 angeordnet. Das erste Netz 3 kann insbesondere ein Gleichspannungsnetz sein. Die Leitungen 2 eines ersten Netzes 3 können auf der Basisstruktur 1 insbesondere ortsfest angeordnet sein.

Auf der Basisstruktur 1 ist weiterhin eine Mehrzahl von ersten Kontakten 4 angeordnet. Die ersten Kontakte 4 sind mittels eines ersten Aktuators 5 von einer ersten Verbindungsposition in eine erste Freigabeposition überführbar. FIG 1 zeigt die ersten Kontakte 4 in der ersten Verbindungsposition, FIG 2 in der ersten Freigabeposition.

Wenn die ersten Kontakte 4 sich in der ersten Freigabeposition befinden, ist eine Umrichterbaugruppe 6 in einer Aufnahme 7 der Basisstruktur 1 befestigbar und auch wieder aus ihr entfernbar. Dies ist in FIG 2 durch einen Doppelpfeil 8 angedeutet. Die Umrichterbaugruppe 6 ist mindestens als einzelne Phase eines Umrichters mit Spannungszwischenkreis ausgebildet. In der Regel ist die Umrichterbaugruppe 6 als mindestens unidirektionale B6-Brücke ausgebildet. In vielen Fällen ist die Umrichterbaugruppe 6 sogar als bidirektionale B6-Brücke ausgebildet. Die einzelnen Umrichter der Umrichterbaugruppe 6 können nach Bedarf als netzgeführte oder als selbstgeführte Thyristoren oder als Transistoren (beispielsweise als IGB-Transistoren) ausgebildet sein. In der Regel sind die einzelnen Umrichter als zu- und abschaltbare Halbleiterschalter ausgebildet.

Wenn die ersten Kontakte 4 sich in der ersten Verbindungsposition befinden, kann unter Umständen die Umrichterbaugruppe 6 ebenfalls in der Aufnahme 7 befestigbar und aus ihr entfernbar sein. Alternativ ist es möglich, dass die Umrichterbaugruppe 6 ausschließlich dann in der Aufnahme 7 befestigbar und aus ihr entfernbar ist, wenn die ersten Kontakte 4 sich in der ersten Freigabeposition befinden.

Wenn die Umrichterbaugruppe 6 in der Aufnahme 7 der Basisstruktur 1 befestigt ist, ist sie in der Aufnahme 7 ortsfest angeordnet. Die Umrichterbaugruppe 6 kann in diesem Fall alternativ mit den Leitungen 2 des ersten Netzes 3 elektrisch verbunden sein oder von den Leitungen 2 des ersten Netzes 3 elektrisch getrennt sein. Insbesondere ist die Umrichterbaugruppe 6 mit den Leitungen 2 des ersten Netzes 3 elektrisch verbunden, wenn und solange die ersten Kontakte 4 sich in der ersten Verbindungsposition (siehe FIG 1) befinden. Umgekehrt ist die Umrichterbaugruppe 6 von den Leitungen 2 des ersten Netzes 3 elektrisch getrennt, wenn und solange die ersten Kontakte 4 sich in der ersten Freigabeposition (siehe FIG 2) befinden. In der Regel ist die Umrichterbaugruppe 6 in diesem Fall von den Leitungen 2 des ersten Netzes 3 allpolig elektrisch getrennt. In Einzelfällen kann es jedoch auch ausreichen, eine nur einpolige Trennung vorzunehmen.
Mittels des ersten Aktuators 5 können die ersten Kontakte 4, wie bereits erwähnt, zumindest von der ersten Verbindungsposition in die erste Freigabeposition überführt werden. Oftmals können die ersten Kontakte 4 mittels des ersten Aktuators 5 auch umgekehrt von der ersten Freigabeposition in die erste Verbindungsposition überführt werden. Unabhängig davon, ob nur eine unidirektionale oder ob eine bidirektionale Bewegung der ersten Kontakte 4 durch den ersten Aktuator 5 möglich ist, wird die Aufnahme 7 beim Überführen der ersten Kontakte 4 von der ersten Verbindungsposition in die erste Freigabeposition (und gegebenenfalls auch umgekehrt) relativ zur Basisstruktur 1 jedoch nicht bewegt. Aufgrund der ortsfesten Anordnung der Umrichterbaugruppe 6 in der Aufnahme 7 wird somit auch die Umrichterbaugruppe 6 relativ zur Basisstruktur 1 nicht bewegt.

In vielen Fällen sind entsprechend der Darstellung in den FIG 1 und 2 auf der Basisstruktur 1 mehrere Aufnahmen 7 vorhanden, in der jeweils eine eigene Umrichterbaugruppe 6 befestigbar ist. In diesem Fall gelten die entsprechenden Ausführungen individuell für die jeweilige Umrichterbaugruppe 6.

Die Umrichterbaugruppe 6 ist weiterhin mit Leitungen 9 eines zweiten elektrischen Netzes 10 verbindbar. Das zweite Netz 10 kann insbesondere ein mehrphasiges Drehstromnetz sein. Die Leitungen 9 des zweiten Netzes 10 können entsprechend der Darstellung in den FIG 1 und 2 auf der Basisstruktur 1 angeordnet sein. Die Leitungen 9 des zweiten Netzes 10 können - analog zu den Leitungen 2 des ersten Netzes 3 - auf der Basisstruktur 1 insbesondere ortsfest angeordnet sein.

Es ist möglich, dass die Leitungen 9 des zweiten elektrischen Netzes 10 proprietär für die jeweilige Umrichterbaugruppe 6 sind, dass also an die die Leitungen 9 des zweiten elektrischen Netzes 10 ausschließlich die jeweilige Umrichterbaugruppe 6, aber keine andere Umrichterbaugruppe 6 angeschlossen ist. Oftmals wird diese Ausgestaltung auch realisiert sein. In diesem Fall ist es möglich, dass die Verbindung der Umrichterbaugruppe mit den Leitungen 9 des zweiten elektrischen Netzes 10 unlösbar ist. Alternativ kann die Verbindung lösbar sein. Wenn die Verbindung lösbar ist, können auf der Basisstruktur 1 - zusätzlich zu den ersten Kontakten 4 - eine Mehrzahl von zweiten Kontakten 11 angeordnet sein. Die zweiten Kontakte 11 sind in diesem Fall - analog zu den ersten Kontakten 4 - mittels eines zweiten Aktuators 12 zumindest von einer zweiten Verbindungsposition in eine zweite Freigabeposition überführbar. FIG 1 zeigt die zweiten Kontakte 11 in der zweiten Verbindungsposition, FIG 2 in der zweiten Freigabeposition.

Analog zu den ersten Kontakten 4 ist die Umrichterbaugruppe 6 als Einheit in der Aufnahme 7 der Basisstruktur 1 befestigbar und aus ihr entfernbar, wenn die zweiten Kontakte 11 sich in der zweiten Freigabeposition befinden (siehe FIG 2). In der zweiten Verbindungsposition kann, nicht aber muss eine entsprechende Lösbarkeit und Verbindbarkeit bestehen. Vorzugsweise besteht bezüglich der ersten Kontakte 4 und der zweiten Kontakte 11 dieselbe Abhängigkeit. Wenn also die Umrichterbaugruppe 6 als Einheit aus der Aufnahme 7 auch dann entfernbar ist, wenn die ersten Kontakte 4 sich in der ersten Verbindungsposition befinden, ist die Umrichterbaugruppe 6 vorzugsweise auch dann als Einheit aus der Aufnahme 7 entfernbar, wenn die zweiten Kontakte 11 sich in der zweiten Verbindungsposition befinden. Wenn umgekehrt die Umrichterbaugruppe 6 als Einheit aus der Aufnahme 7 nicht entfernbar ist, wenn die ersten Kontakte 4 sich in der ersten Verbindungsposition befinden, ist die Umrichterbaugruppe 6 vorzugsweise auch dann als Einheit nicht aus der Aufnahme 7 entfernbar, wenn die zweiten Kontakte 11 sich in der zweiten Verbindungsposition befinden.

Analog zur Verbindung mit den Leitungen 2 des ersten Netzes 3 kann die Umrichterbaugruppe 6, sofern sie in der Aufnahme 7 befestigt ist, alternativ mit den Leitungen 9 des zweiten Netzes 10 elektrisch verbunden sein oder von den Leitungen 9 des zweiten Netzes 10 elektrisch getrennt sein. Insbesondere ist die Umrichterbaugruppe 6 mit den Leitungen 9 des zweiten Netzes 10 elektrisch verbunden, wenn und solange die zweiten Kontakte 11 sich in der zweiten Verbindungsposition (siehe FIG 1) befinden. Umgekehrt ist die Umrichterbaugruppe 6 von den Leitungen 9 des zweiten Netzes 10 elektrisch getrennt, wenn und solange die zweiten Kontakte 11 sich in der zweiten Freigabeposition (siehe FIG 2) befinden. In der Regel ist die Umrichterbaugruppe 6 in diesem Fall von den Leitungen 9 des zweiten Netzes 10 allpolig elektrisch getrennt. In Einzelfällen kann es jedoch auch ausreichen, eine nur einpolige Trennung vorzunehmen.

Analog zur Situation bezüglich der ersten Kontakte 4 wird die Aufnahme 7 beim Überführen der zweiten Kontakte 11 von der zweiten Verbindungsposition in die zweiten Freigabeposition (und gegebenenfalls auch umgekehrt) relativ zur Basisstruktur 1 nicht bewegt.

Wenn das erste Netz 3 als Gleichspannungsnetz ausgebildet ist, kann es entsprechend der Darstellung in den FIG 1 und 2 - gegebenenfalls pro Umrichterbaugruppe 6 - mindestens einen Stützkondensator 13 aufweisen. In diesem Fall ist der Stützkondensator 13 bzw. sind die Stützkondensatoren 13 ortsfest auf der Basisstruktur 1 angeordnet. Er wird also beim Überführen der ersten Kontakte 4 von der ersten Verbindungsposition in die erste Freigabeposition (und gegebenenfalls auch umgekehrt) nicht bewegt.

Nachfolgend wird näher auf die ersten Kontakte 4, deren Ausgestaltung, deren Verbindungsmöglichkeiten mit den Leitungen 2 des ersten Netzes 3 und den ersten Aktuator 5 näher eingegangen. Die entsprechenden Ausgestaltungen sind jedoch in analoger Weise auch für die zweiten Kontakte 11, deren Ausgestaltung, deren Verbindungsmöglichkeiten mit den Leitungen 9 des zweiten Netzes 10 und den zweiten Aktuator 12 möglich.

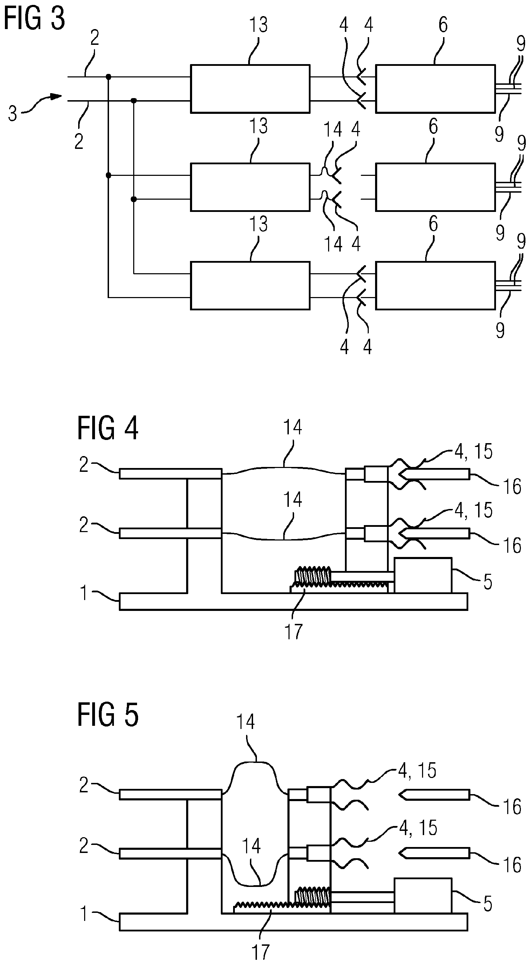

Gemäß den FIG 3 bis 5 sind die ersten Kontakte 4 mit den Leitungen 2 des ersten Netzes 3 über flexible Leitungen 14 verbunden. Die ersten Kontakte 4 können gemäß den FIG 3 bis 5 insbesondere als Aufnahmen 15 für Stecker 16 elektrischer Steckverbindungen ausgebildet sein. Auch die umgekehrte Ausgestaltung ist möglich. Die flexiblen Leitungen 14 weisen, von den Leitungen 2 des ersten Netzes 3 zu den ersten Kontakten 4 gesehen, eine Länge l auf.

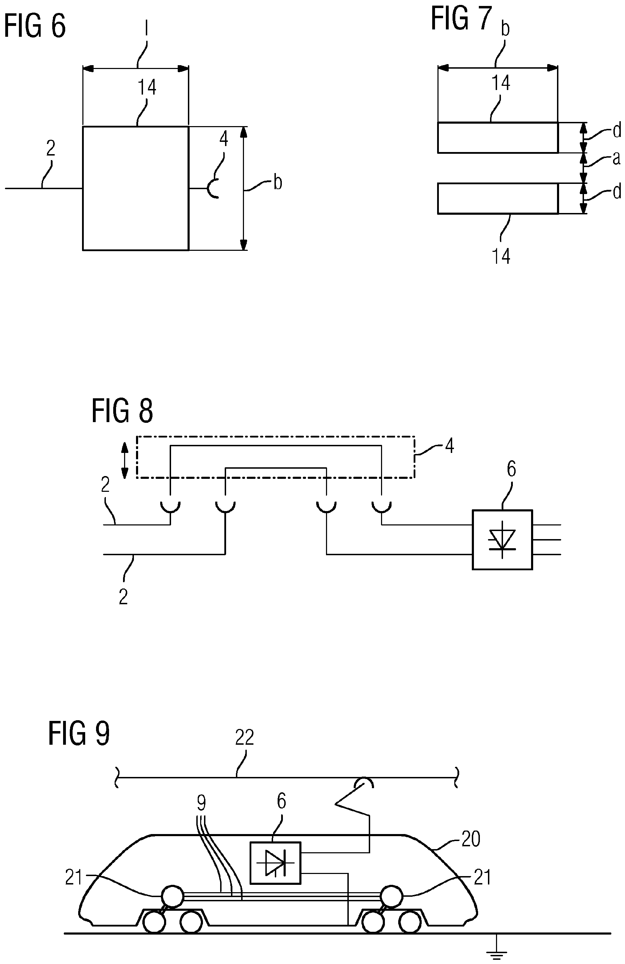

Die flexiblen Leitungen 14 können beispielsweise entsprechend der Darstellung in den FIG 6 und 7 als Bandleitungen ausgebildet sein. Im Falle der Ausbildung als Bandleitungen weisen die flexiblen Leitungen 14 eine Breite b und eine Dicke d auf. Weiterhin weisen die flexiblen Leitungen 14 einen Abstand a voneinander auf. Der Abstand a erstreckt sich - siehe insbesondere FIG 7 - in die gleiche Richtung wie die Dicke d der Leitungen 14. Zwischen den Leitungen 14 kann eine Isolierschicht angeordnet sein. Die Isolierschicht ist in den FIG 6 und 7 nicht mit dargestellt.

Vorzugsweise ist die Breite b erheblich größer als der Abstand a der Leitungen 14 voneinander, insbesondere mindestens dreimal so groß. Beispielsweise kann die Breite b mindestens fünfmal, zehnmal oder zwanzigmal so groß sein wie der Abstand a der Leitungen 14 voneinander.

Vorzugsweise ist die Breite b größer als die Länge l.

Gemäß den FIG 4 und 5 ist der erste Aktuator 5 als elektrischer Aktuator ausgebildet, insbesondere als elektrischer Motor, der über einen Spindeltrieb 17 auf die ersten Kontakte 4 wirkt. Alternativ könnte der erste Aktuator 5 beispielsweise als hydraulischer oder pneumatischer Aktuator ausgebildet sein. Die Ausgestaltung des ersten Aktuators 5 ist unabhängig von der Ausgestaltung der Verbindung der ersten Kontakte 4 zu den Leitungen 2 des ersten Netzes 3 und auch unabhängig davon, ob die ersten Kontakte 4 als Aufnahmen 15 für Stecker 16, direkt als Stecker 16 oder anders ausgebildet sind.

Die ersten Kontakte 4 müssen weiterhin nicht zwangsweise über flexible Leitungen 14 mit den Leitungen 2 des ersten Netzes 3 verbunden sein. Alternativ zu einer Verbindung über flexible Leitungen 14 können die ersten Kontakte 4 beispielsweise entsprechend der schematischen Darstellung in FIG 8 als Kontaktbrücken 18 ausgebildet sein. In diesem Fall sind die ersten Kontakte 4 in der ersten Verbindungsposition sowohl mit der Umrichterbaugruppe 6 als auch mit den Leitungen 2 des ersten Netzes 3 elektrisch verbunden. In der ersten Freigabeposition sind die ersten Kontakte 4 - selbstverständlich - von der Umrichterbaugruppe 6 elektrisch getrennt. Zusätzlich sind die ersten Kontakte 4 bei der Ausgestaltung gemäß FIG 8 in der ersten Freigabeposition jedoch auch von den Leitungen 2 des ersten Netzes 3 elektrisch getrennt.

In der Regel weist die Umrichteranordnung entsprechend der Darstellung in FIG 1 weiterhin eine Auswertungseinrichtung 19 auf. Mittels der Auswertungseinrichtung 19 wird - in an sich bekannter Weise - automatisch eine Fehlfunktion der Umrichterbaugruppe 6 erfasst. Wenn eine Fehlfunktion der Umrichterbaugruppe 6 erfasst wird, steuert die Auswertungseinrichtung 19 den ersten Aktuator 5 und gegebenenfalls auch den zweiten Aktuator 12 für die jeweilige Umrichterbaugruppe 6 an. Die Auswertungseinrichtung 19 ist somit als Steuereinrichtung für den ersten Aktuator 5 und gegebenenfalls auch den zweiten Aktuator 12 ausgebildet. Weiterhin ist sie zur Übermittlung der entsprechenden Steuersignale mit dem ersten Aktuator 5 und gegebenenfalls auch dem zweiten Aktuator 12 steuerungstechnisch verbunden.

In manchen Fällen ist zusammen mit dem Trennen einer bestimmten Umrichterbaugruppe 6 von den Leitungen 2 des ersten Netzes 3 auch ein Trennen dieser Umrichterbaugruppe 6 von den Leitungen 9 des zweiten Netzes 10 erforderlich. In diesem Fall werden - von der Auswertungseinrichtung 19 oder allgemein von einer Steuereinrichtung - der erste und der zweite Aktuator 5, 12 gemeinsam angesteuert. Alternativ zu einer gemeinsamen Ansteuerung können die beiden Aktuatoren 5, 12 auch miteinander identisch sein.

Die Umrichteranordnung kann für beliebige Zwecke eingesetzt werden. Beispielsweise kann die Umrichteranordnung entsprechend der Darstellung in FIG 9 Bestandteil eines Fahrzeugs 20 sein, beispielsweise eines Elektroautos, eines elektrisch betriebenen Flugzeugs, eines Schiffs oder - wie in FIG 9 dargestellt - eines Schienenfahrzeugs.

Im Falle eines Fahrzeugs 20 ist die Umrichteranordnung über die Leitungen 9 des zweiten Netzes 10 mit einem Fahrantrieb 21 (siehe auch die FIG 1 und 2) des Fahrzeugs 20 verbunden. Das erste Netz 3 kann autark sein oder - beispielsweise - über eine Oberleitung 22 mit elektrischer Energie versorgt werden. Zwischen der Oberleitung 22 und dem ersten Netz 3 kann gegebenenfalls eine Gleichrichtung erfolgen. Aus Gründen der Übersichtlichkeit sind weiterhin in FIG 9 die Basisstruktur 1, die Kontakte 4, 11, die Aktuatoren 5, 12 und auch andere Elemente der Umrichteranordnung wie beispielsweise die Stützkondensatoren 13 nicht mit dargestellt. Sie sind jedoch vorhanden.

Zusammengefasst betrifft die vorliegende Erfindung somit folgenden Sachverhalt:
Eine Umrichteranordnung weist eine Basisstruktur 1 auf, auf der Leitungen 2 eines ersten elektrischen Netzes 3 angeordnet sind. Auf der Basisstruktur 1 ist weiterhin eine Mehrzahl von ersten Kontakten 4 angeordnet, die mittels eines ersten Aktuators 5 zumindest von einer ersten Verbindungsposition in eine erste Freigabeposition überführbar sind. In der ersten Freigabeposition ist eine Umrichterbaugruppe 6 als Einheit in einer Aufnahme 7 der Basisstruktur 1 befestigbar und aus der Aufnahme 7 entfernbar. Die Umrichterbaugruppe 6 ist, sofern sie in der Aufnahme 7 der Basisstruktur 1 befestigt ist, in der Aufnahme 7 ortsfest angeordnet. Sie ist mit den Leitungen 2 des ersten Netzes 3 elektrisch verbunden, wenn und solange die ersten Kontakte 4 sich in der ersten Verbindungsposition befinden. Sie ist von den Leitungen 2 des ersten Netzes 3 elektrisch getrennt, wenn und solange die ersten Kontakte 4 sich in der ersten Freigabeposition befinden. Die Aufnahme 7 wird beim Überführen der ersten Kontakte 4 von der ersten Verbindungsposition in die erste Freigabeposition nicht bewegt.

Die vorliegende Erfindung weist viele Vorteile auf. Insbesondere kann auf einfache und zuverlässige Weise, mit geringem Energieaufwand und mit nur kleinen bewegten Massen eine zuverlässige Trennung der Umrichterbaugruppe 6 von den Leitungen 2 des ersten Netzes 3 erfolgen. Insbesondere aufgrund dieser Ausgestaltung ist die erfindungsgemäße Umrichteranordnung auch unter Einsatzbedingungen einsetzbar, bei denen die Umrichteranordnung Vibrationen und Schockbelastungen ausgesetzt ist. Weiterhin kann auf einfache Weise eine niederinduktive Verbindung zwischen dem Stützkondensator 13 bzw. den Stützkondensatoren 13 und der Umrichterbaugruppe 6 sichergestellt werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Umrichteranordnung,
- wobei die Umrichteranordnung eine Basisstruktur (1) aufweist,
- wobei auf der Basisstruktur (1) Leitungen (2) eines ersten elektrischen Netzes (3) angeordnet sind,
- wobei auf der Basisstruktur (1) eine Mehrzahl von ersten Kontakten (4) angeordnet ist, die mittels eines ersten Aktuators (5) zumindest von einer ersten Verbindungsposition in eine erste Freigabeposition überführbar sind,
- wobei in der ersten Freigabeposition eine Umrichterbaugruppe (6) als Einheit in einer Aufnahme (7) der Basisstruktur (1) befestigbar ist und aus der Aufnahme (7) entfernbar ist und
- wobei die Umrichterbaugruppe (6), sofern sie in der Aufnahme (7) der Basisstruktur (1) befestigt ist, in der Aufnahme (7) ortsfest angeordnet ist und mit den Leitungen (2) des ersten Netzes (3) elektrisch verbunden ist, wenn und solange die ersten Kontakte (4) sich in der ersten Verbindungsposition befinden, und von den Leitungen (2) des ersten Netzes (3) elektrisch getrennt ist, wenn und solange die ersten Kontakte (4) sich in der ersten Freigabeposition befinden, und und **dadurch gekennzeichnet**
- **dass** die Aufnahme (7) beim Überführen der ersten Kontakte (4) von der ersten Verbindungsposition in die erste Freigabeposition nicht bewegt wird.

2. Umrichteranordnung nach Anspruch 1, **dadurch gekennzeichnet, dass** das erste Netz (3) ein Gleichspannungsnetz ist, dass das Gleichspannungsnetz (3) mindestens einen Stützkondensator (13) aufweist und dass der Stützkondensator (13) ortsfest auf der Basisstruktur (1) angeordnet ist.

3. Umrichteranordnung nach Anspruch 1 oder 2, **dadurch gekennzeichnet, dass** die ersten Kontakte (4) mit den Leitungen (2) des ersten Netzes (3) über flexible Leitungen (14) verbunden sind.

4. Umrichteranordnung nach Anspruch 3, **dadurch gekennzeichnet, dass** die flexiblen Leitungen (14) als Bandleitungen ausgebildet sind, die von den Leitungen (2) des ersten Netzes (3) zu den ersten Kontakten (4) gesehen eine Länge (1) aufweisen, im Querschnitt gesehen eine Breite (b) und eine Dicke (d) aufweisen und voneinander einen Abstand (a) aufweisen.

5. Umrichteranordnung nach Anspruch 4, **dadurch gekennzeichnet, dass** die Breite (b) der flexiblen Leitungen (14) erheblich größer als der Abstand (a) der flexiblen Leitungen (14) voneinander ist.

6. Umrichteranordnung nach Anspruch 1 oder 2, **dadurch gekennzeichnet, dass** die ersten Kontakte (4) als Kontaktbrücken (18) ausgebildet sind, die in der ersten Verbindungsposition sowohl mit der Umrichterbaugruppe (6) als auch mit den Leitungen (2) des ersten Netzes (3) elektrisch verbunden sind und in der ersten Freigabeposition sowohl von der Umrichterbaugruppe (6) als auch von den Leitungen (2) des ersten Netzes (3) elektrisch getrennt sind.

7. Umrichteranordnung nach einem der obigen Ansprüche, **dadurch gekennzeichnet, dass** die ersten Kontakte (4) als Stecker (16) oder Aufnahmen (15) für Stecker (16) elektrischer Steckverbindungen ausgebildet sind.

8. Umrichteranordnung nach einem der obigen Ansprüche, **dadurch gekennzeichnet, dass** die Umrichteranordnung eine Auswertungseinrichtung (19) aufweist, mittels derer automatisch eine Fehlfunktion der Umrichterbaugruppe (6) erfasst wird, und dass die Auswertungseinrichtung (19) als Steuereinrichtung für den ersten Aktuator (5) ausgebildet ist und mit dem ersten Aktuator (5) steuerungstechnisch verbunden ist.

9. Umrichteranordnung nach einem der obigen Ansprüche, **dadurch gekennzeichnet, dass** der erste Aktuator (5) als elektrischer, hydraulischer oder pneumatischer Aktuator ausgebildet ist.

10. Umrichteranordnung nach einem der obigen Ansprüche, **dadurch gekennzeichnet,**
- **dass** auf der Basisstruktur (1) Leitungen (9) eines zweiten elektrischen Netzes (10) angeordnet ist,
- **dass** auf der Basisstruktur (1) eine Mehrzahl von zweiten Kontakten (11) angeordnet ist, die mittels eines zweiten Aktuators (12) zumindest von einer zweiten Verbindungsposition in eine zweite Freigabeposition überführbar sind,
- **dass** in der zweiten Freigabeposition die Umrichterbaugruppe (6) als Einheit in der Aufnahme (7) der Basisstruktur (1) befestigbar ist und aus der Aufnahme (7) entfernbar ist,
- **dass**, sofern die Umrichterbaugruppe (6) in der Aufnahme (7) der Basisstruktur (1) befestigt ist, die Umrichterbaugruppe (6) mit den Leitungen (9) des zweiten Netzes (10) elektrisch verbunden ist, wenn und solange die zweiten Kontakte (11) sich in der zweiten Verbindungsposition befinden, und von den Leitungen (9) des zweiten Netzes (10) getrennt ist, wenn und solange die zweiten Kontakte (11) sich in der zweiten Freigabeposition befinden und
- **dass** die Aufnahme (7) beim Überführen der zweiten Kontakte (11) von der zweiten Verbindungsposition in die zweite Freigabeposition nicht bewegt wird.

11. Umrichteranordnung nach Anspruch 10, **dadurch gekennzeichnet, dass** der erste und der zweite Aktuator (5, 12) von einer Steuereinrichtung (19) gemeinsam angesteuert werden oder miteinander identisch sind.

12. Umrichteranordnung nach Anspruch 10 oder 11, **dadurch gekennzeichnet, dass** das zweite Netz (10) ein mehrphasiges Drehstromnetz ist.

13. Fahrzeug, **dadurch gekennzeichnet, dass** es eine Umrichteranordnung nach einem der obigen Ansprüche aufweist und dass die Umrichteranordnung über ein zweites Netz (10) mit einem Fahrantrieb (21) des Fahrzeugs verbunden ist.

## Claims

1. Converter arrangement,
- wherein the converter arrangement has a basic structure (1),
- wherein lines (2) of a first electrical network (3) are arranged on the basic structure (1).
- wherein a plurality of first contacts (4) are arranged on the basic structure (1), which are able to be transferred by means of a first actuator (5) at least from a first connection position into a first release position,
- wherein, in the first release position, a converter assembly (6) is able to be fastened as a unit in a receptacle (7) of the basic structure (1) and is able to be removed from the receptacle (7), and
- wherein the converter assembly (6), provided it is fastened in the receptacle (7) of the basic structure (1), is arranged in a fixed location in the receptacle (7) and is electrically connected to the lines (2) of the first network (3) when and for as long as the first contacts (4) are located in the first connection position, and is electrically disconnected from the lines (2) of the first network (3) when and for as long as the first contacts (4) are located in the first release position,
and **characterised in that**
- the receptacle (7) will not be moved when the first contacts (4) are transferred from the first connection position into the first release position.

2. Converter arrangement according to claim 1,
**characterised in that** the first network (3) is a DC voltage network, that the DC voltage network (3) has at least one voltage stabilising capacitor (13) and that the voltage stabilising capacitor (13) is arranged in a fixed location on the basic structure (1).

3. Converter arrangement according to claim 1 or 2,
**characterised in that** the first contacts (4) are connected to the lines (2) of the first network (3) via flexible lines (14).

4. Converter arrangement according to claim 3,
**characterised in that** the flexible lines (14) are embodied as strip lines that, seen from the lines (2) of the first network (3) to the first contacts (4), have a length (1), seen in cross-section have a width (b) and a thickness (d) and are at a distance (a) from one another.

5. Converter arrangement according to claim 4,
**characterised in that** the width (b) of the flexible lines (14) is significantly greater than the distance (a) of the flexible lines (14) from one another.

6. Converter arrangement according to claim 1 or 2,
**characterised in that** the first contacts (4) are embodied as contact bridges (18), which in the first connection position are electrically connected both to the converter assembly (6) and also to the lines (2) of the first network (3) and in the first release position are electrically disconnected both from the converter assembly (6) and also from the lines (2) of the first network (3).

7. Converter arrangement according to one of the above claims,
**characterised in that** the first contacts (4) are embodied as plugs (16) or receptacles (15) for plugs (16) of plug-in electrical connections.

8. Converter arrangement according to one of the above claims,
**characterised in that** the converter arrangement has an evaluation device (19) by means of which a malfunction of the converter assembly (6) will be detected automatically and that the evaluation device (19) is embodied as a control device for the first actuator (5) and is connected for control purposes to the first actuator (5).

9. Converter arrangement according to one of the above claims,
**characterised in that** the first actuator (5) is embodied as an electrical, hydraulic or pneumatic actuator.

10. Converter arrangement according to one of the above claims,
**charactrised in** that
- lines (9) of a second electrical network (10) are arranged on the basic structure (1),
- a plurality of second contacts (11) is arranged on the basic structure (1), which is able to be transferred by means of a second actuator (12) at least from a second connection position into a second release position,
- in the second release position, the converter assembly (6) is able to be fastened as a unit in a receptacle (7) of the basic structure (1) and is able to be removed from the receptacle (7),
- the converter assembly (6), provided it is fastened in the receptacle (7) of the basic structure (1), is arranged in a fixed location in the receptacle (7) and is electrically connected to the lines (9) of the second network (10) when and for as long as the second contacts (11) are located in the second connection position, and is electrically disconnected from the lines (9) of the second network (10) when and for as long as the second contacts (11) are located in the second release position,
- the receptacle (7) will not be moved on transfer of the second contacts (11) from the second connection position into the second release position.

11. Converter arrangement according to claim 10,
**characterised in that** the first and the second actuator (5, 12) will be jointly activated by a control device (19) or are identical to one another.

12. Converter arrangement according to claim 10 or 11,
**characterised in that** the second network (10) is a multi-phase alternating current network.

13. Vehicle, **characterised in that** it has a converter arrangement according to one of the above claims and that the converter arrangement is connected via a second network (10) to a traction drive (21) of the vehicle.

## Revendications

1. Agencement de convertisseur,
- dans lequel l'agencement de convertisseur a une structure (1) de base,
- dans lequel des lignes (2) d'un premier réseau (3) électrique sont montées sur la structure (1) de base,
- dans lequel, sur la structure (1) de base, est disposée une pluralité de premiers contacts (4), qui, au moyen d'un premier actionneur (5), peuvent passer au moins d'une première position de liaison à une première position de libération,
- dans lequel, dans la première position de libération, un module (6) de convertisseur peut être fixé en tant qu'unité dans un logement (7) de la structure (1) de base et peut être retiré du logement (7) et
- dans lequel le module (6) de convertisseur, pour autant qu'il est fixé dans le logement (7) de la structure (1) de base, est disposé à poste fixe dans le logement (7) et est relié électriquement aux lignes (2) du premier réseau (3), si et tant que les premiers contacts (4) se trouvent dans la première position de liaison et est séparé électriquement des lignes (2) du premier réseau (3) si et tant que les premiers contacts (4) se trouvent dans la première position de libération
et **caractérisé**
- **en ce que** le logement (7) n'est pas déplacé lors du passage des premiers contacts (4), de la première position de liaison à la première position de libération.

2. Agencement de convertisseur suivant la revendication 1, **caractérisé en ce que** le premier réseau (3) est un réseau de tension continue, **en ce que** le réseau (3) de tension continue a au moins un condensateur (13) d'appui et **en ce que** le condensateur (13) d'appui est monté à poste fixe sur la structure (1) de base.

3. Agencement de convertisseur suivant la revendication 1 ou 2, **caractérisé en ce que** les premiers contacts (4) sont reliés aux lignes (2) du premier réseau (3) par des lignes (14) souples.

4. Agencement de convertisseur suivant la revendication 3, **caractérisé en ce que** les lignes (14) souples sont constituées sous la forme de guide d'ondes, qui, considérées des lignes (2) du premier réseau (3) aux premiers contacts (4), ont une longueur (1), considérées en section transversale une largeur (b) et une épaisseur (d) et sont à une distance (a) les unes des autres.

5. Agencement de convertisseur suivant la revendication 4, **caractérisé en ce que** la largeur (b) des lignes souples est considérablement plus grande que la distance (a) des lignes souples entre elles.

6. Agencement de convertisseur suivant la revendication 1 ou 2, **caractérisé en ce que** les premiers contacts (4) sont constitués sous la forme de ponts (18) de contact, qui, dans la première position de liaison, sont reliés électriquement, tant au module (6) de convertisseur qu'également aux lignes (2) du premier réseau (3), et, dans la première position de libération, sont séparés électriquement, tant du module (6) de convertisseur qu'également des lignes (2) du premier réseau (3).

7. Agencement de convertisseur suivant l'une des revendications précédentes, **caractérisé en ce que** les premiers contacts sont constitués sous la forme de parties (16) mâles ou de parties (15) femelles de prises (16) de liaison électrique par enfichage.

8. Agencement de convertisseur suivant l'une des revendications précédentes, **caractérisé en ce que** l'agencement de convertisseur a un dispositif (19) d'exploitation, au moyen duquel un fonctionnement défectueux du module (6) de convertisseur est détecté automatiquement, et **en ce que** le dispositif (19) d'exploitation est constitué sous la forme d'un dispositif de commande du premier actionneur (5) et relié en technique de commande au premier actionneur (5)

9. Agencement de convertisseur suivant l'une des revendications précédentes, **caractérisé en ce que** le premier actionneur (5) est constitué sous la forme d'un actionneur électrique, hydraulique ou pneumatique.

10. Agencement de convertisseur suivant l'une des revendications précédentes, **caractérisé**
- **en ce que** des lignes (9) d'un deuxième réseau (10) électrique sont montées sur la structure (1) de base,
- **en ce que**, sur la structure (1) de base, est disposée une pluralité de deuxièmes contacts (11), qui, au moyen d'un deuxième actionneur (12), peuvent passer au moins d'une deuxième position de liaison à une deuxième position de libération,
- **en ce que**, dans la deuxième position de libération, le module (6) de convertisseur peut être fixé, en tant qu'unité, dans le logement (7) de la structure (1) de base et peut être retiré du logement (7),
- **en ce que**, pour autant que le module (6) de convertisseur est fixé dans le logement (7) de la structure (1) de base, le module (6) de convertisseur est relié électriquement aux lignes (9) du deuxième réseau (10), si et tant que les deuxièmes contacts (11) se trouvent dans la deuxième position de liaison, et est séparé des lignes (9) du deuxième réseau (10), si et pour autant que les deuxièmes contacts (11) se trouvent dans la deuxième position de libération et
- **en ce que** le logement (7) n'est pas déplacé lorsque les deuxièmes contacts (11) passent de la deuxième position de liaison à la deuxième position de libération.

11. Agencement de convertisseur suivant la revendication 10, **caractérisé en ce que** le premier et le deuxième actionneurs (5, 12) sont commandés conjointement par un dispositif (19) de commande ou sont pareils.

12. Agencement de convertisseur suivant la revendication 10 ou 11, **caractérisé en ce que** le deuxième réseau (10) est un réseau à courant triphasé.

13. Véhicule, **caractérisé en ce qu'**il a un agencement de convertisseur suivant l'une des revendications précédentes et **en ce que** l'agencement de convertisseur est relié à l'entraînement (21) du véhicule par un deuxième réseau (10).
